# EUROPÄISCHE PATENTSCHRIFT

(11) **EP 2 795 414 B1**
(45) Veröffentlichungstag und Bekanntmachung des Hinweises auf die Patenterteilung: **02.03.2016**
(21) Anmeldenummer: 12816049.6
(22) Anmeldetag: 19.12.2012
(51) Int. Cl.: G06Q 10/10, G06F 17/21, G05B 15/02, G05B 19/042

(54) **AUTOMATISIERTE PROJEKTIERUNG EINER LEITTECHNIK EINER TECHNISCHEN ANLAGE**
AUTOMATED PROJECT DESIGN OF A CONTROL TECHNOLOGY FOR A TECHNICAL SYSTEM
PLANIFICATION AUTOMATISÉE D'UNE TECHNIQUE DE GESTION D'UNE INSTALLATION TECHNIQUE

(30) Priorität: 23.12.2011 DE 102011089892
(43) Veröffentlichungstag der Anmeldung: 29.10.2014
(73) Patentinhaber: Siemens Aktiengesellschaft, 80333 München (DE)
(72) Erfinder: WENDELBERGER, Klaus, 68789 St. Leon-Rot (DE)
(86) Internationale Anmeldenummer: PCT/EP2012/076070
(87) Internationale Veröffentlichungsnummer: WO 2013/092654

(56) Entgegenhaltungen:
- EP-A1- 1 048 993
- WO-A1-96/16361
- DE-A1- 19 949 884

## Beschreibung

Die Erfindung betrifft ein Verfahren zur Erzeugung einer anlagenspezifischen Projektierungsunterlage, insbesondere zur Erzeugung eines anlagenspezifischen Funktionsplans, für eine zu projektierende Leittechnik einer technischen Anlage sowie eine zur Durchführung des Verfahrens ausgebildete Vorrichtung.

Unter einer Leittechnik, in diesem Fall einer Prozessleittechnik, einer Anlage bezeichnet man üblicherweise Mittel und Verfahren, die einem Steuern, Regeln und Sichern einer solchen prozess- bzw. verfahrenstechnischen Anlage dienen.

Unter einer Projektierung wird üblicherweise eine Vorbereitung eines Ereignisses, eines Prozesses oder eines realen Konstruktes verstanden. Im Bereich einer Prozesstechnik und Prozessautomatisierung wird der Begriff Projektierung für die Erstellung von technischen (oder anderen) Unterlagen für eine zu projektierende Anlage verwendet.

Derartige Projektierungsunterlagen sind beispielsweise:
- Funktionspläne von Steuerungen und Regelungen (Steuerungsfunktionsplan, Regelungsfunktionsplan), in denen dargestellt ist, welche Messgrößen bei einer Anlage verwendet und wie diese algorithmisch verarbeitet werden, um zu ermitteln, wie Antriebe, Ventile, Klappen, Motoren, o. ä. der Anlage zu verfahren sind;
- Bedienbilder, über die ein Anlagenfahrer Informationen über einen aktuellen Zustand einer Anlage erhält, beispielsweise Anzeigen, und über die der Anlagenfahrer Stelleingriffe vornehmen kann, wie Bedienelemente;
- Beschreibungen, in denen Funktionalitäten der Anlage und von Automatisierungsfunktionen der Anlage verbal erläutert sind.

Eine solche Projektierungsunterlage selbst ist wiederum aus meist mehreren, miteinander in Zusammenhang stehenden bzw. verknüpften Elementen aufgebaut, welche im Folgenden als sogenannte Projektierungsobjekte bezeichnet werden sollen.

Beispielsweise kann ein solches Projektierungsobjekt ein (Funktions-)Baustein (mit/ohne Verknüpfungen, insbesondere Verbindungen, zu anderen Bausteinen) eines Funktionsplans oder eine Verknüpfung selbst in einem Funktionsplan, ein grafisches Element eines Bedienbildes bzw. eines Bedieninterfaces oder ein Textbaustein einer Beschreibung sein.

Eine Projektierung von höherwertigen leittechnischen Funktionen in der Prozessautomatisierung ist grundsätzlich sehr aufwändig und fehleranfällig.

Aus dem Stand der Technik sind unterschiedliche Projektierungsverfahren einer Leittechnik einer technischen Anlage bekannt. So offenbart die WO 96/16361 A1 ein Projektierungsverfahren, bei dem die Projektierung der Leittechnik einer aus Komponenten bestehenden technischen Anlage maschinell durchgeführt wird. Aus der DE 199 49 884 A1 ist ein Verfahren zum Erstellen von Leittechnik bekannt, wobei für die Erstellung einer Leittechnik eine Verfahrenstechnik und eine Leittechnik einer technischen Anlage vorprojektiert werden und anschließend in einem Technologieplan zusammengeführt werden. Die EP 1 048 993 A1 offenbart ein zweistufiges Planungsverfahren für eine Leittechnik einer technischen Anlage. In einer ersten Planungsstufe wird eine Primärtechnik einer Anlage, d.h. ein (verfahrens-/prozesstechnisches) Grunddesign der Anlage, geplant, in einer zweiten Planungsstufe wird eine davon abhängige Sekundärtechnik geplant, wobei auch eine Leittechnik umfasst ist.

Eine effiziente Methode, einen Aufwand bei der Projektierung bzw. zur Erstellung solcher Projektierungsunterlagen zu senken und eine Qualität zu verbessern, ist eine Standardisierung.

Im Rahmen einer Standardisierung bzw. der Verwendung von Standards ist es auch bekannt, solche Standards entsprechend abzulegen bzw. abzuspeichern, beispielsweise in Bibliotheken, Archiven, Datenbanken o.ä., - was auch in verschiedener Form, wie auf Papier oder elektronisch möglich ist - wo sie einem Benutzer, beispielsweise einem Projekteur, über einen Zugriff zur Verfügung stehen.

Eine wiederholte Verwendung eines Standards bei der Projektierung bzw. für eine Projektierungsunterlage, wie für einen Funktionsplan, ein Bedienbild bzw. eine Beschreibung, stellt sicher, dass
- zum einen der entsprechende Projektierungsaufwand deutlich reduziert wird, da auf eine bereits existierende (Standard-)Vorlage zurückgegriffen werden kann,
- und zum anderen die Qualität der Projektierung deutlich erhöht wird, da auf (Standard-)Unterlagen zurückgegriffen wird, die sich in mehreren Projekten bereits bewährt haben.

Verfahrenstechnische Anlagen unterscheiden sich jedoch in ihrem spezifischen verfahrenstechnischen und/oder konstruktiven Aufbau (Auslegung der Anlagen auf unterschiedliche Arbeitspunkte und Betriebsweisen, andere Hersteller für einzelne Anlagenkomponenten o.ä.). Außerdem werden kundenseitig spezifische, unterschiedliche Anforderungen an die jeweilige Anlage gestellt.

Dieses erfordert, dass
- entweder definierte Standards immer wieder auf die jeweiligen spezifischen Anforderungen eines bestimmten Projektes, d.h. eine zu projektierende Anlage, anzupassen sind oder
- für jeden Standard verschiedene Varianten zur erstellen sind, mit denen dann zumindest zum größten Teil projektspezifische Anforderungen einer Anlage direkt erfüllt werden können.

Eine händische Anpassung eines Standards an die jeweiligen projektspezifischen Anforderungen ist immer noch mit einem erheblichen Aufwand und einer entsprechenden Fehleranfälligkeit verbunden.

Außerdem muss der Projekteur ein exzellentes technologisches und leittechnisches Know-how haben, um die projektspezifischen Änderungen korrekt vornehmen zu können.

Demgegenüber besteht bei der Verwendung verschiedener Varianten für jeden Standard eine Problematik in einer Beherrschung einer Variantenvielfalt.

Erzeugte man für jede mögliche Variante, die durch den projektspezifischen, verfahrenstechnischen Aufbau der jeweiligen Anlage sowie die jeweiligen spezifische Kundenanforderung bestimmt wird, einen eigenen Standard, hat dies geradezu eine Inflation von Standards zur Folge. Dieses führt zu weiteren Nachteilen wie:
- Bei der projektspezifischen Projektierung muss sich der Projekteur aus einer Vielzahl von Standards die korrekte Variante heraussuchen. Dieser Vorgang ist bereits wieder mit einem erheblichen Aufwand und Fehlerwahrscheinlichkeit verbunden.
- Der Projekteur muss sich außerdem als Experte sehr gut unter "seinen" Standards auskennen, d. h. er muss sich gut in der Bibliothek, dem Archiv oder der Datenbank der Standards auskennen.
- Auch können ihm bei der projektspezifischen Auswahl der Standards Fehler unterlaufen.
- Eine Vielzahl von Standards verhindert, dass eine kontinuierliche Wartung und Pflege der Standards bzw. der Bibliothek, des Archivs oder der Datenbank stattfinden kann.
- Standardbibliotheken, -archive oder -datenbanken, in denen nicht der aktuelle Stand der Erkenntnis abgelegt ist, bzw. Standards, die nicht den aktuellen Stand der Erkenntnis widerspiegeln und die sogar häufig Fehler aufweisen oder die untereinander nicht zueinander passen, werden von den Projekteuren jedoch zurecht abgelehnt.

Ungeachtet dessen können Standards, wollte man auch selbst nahezu alle möglichen Varianten erfassen, nicht zuletzt auf Grund der verfahrenstechnischen Vielfalt und Spezifikationen von Anlagen, eine vollständige Abdeckung von zu projektierenden Anlagen nicht gewährleisten. Ein Rest an "händischer Nacharbeit" an aus Standards generierten anlagenspezifischen Projektierungsunterlagen bleibt erforderlich.

Der Erfindung liegt die Aufgabe zugrunde, ein Verfahren und eine Vorrichtung zu schaffen, mit welchen eine Projektierung einer technischen Anlage, insbesondere eine Erstellung einer Projektierungsunterlage, wie beispielsweise eines Funktionsplans, für eine Leittechnik einer technischen Anlage, mit geringem Aufwand und geringer Fehleranfälligkeit durchführbar ist. Ferner liegt der Erfindung die Aufgabe zugrunde, oben genannte Nachteile im Stand der Technik zu verbessern.

Die Aufgabe wird durch das Verfahren zur Erzeugung einer anlagenspezifischen Projektierungsunterlage, insbesondere zur Erzeugung eines anlagenspezifischen Funktionsplans, für eine zu projektierende Leittechnik einer technischen Anlage sowie eine entsprechende Vorrichtung zur Erzeugung einer anlagenspezifischen Projektierungsunterlage, insbesondere zur Erzeugung eines anlagenspezifischen Funktionsplans, für eine zu projektierende Leittechnik einer technischen Anlage mit den Merkmalen gemäß dem jeweiligen unabhängigen Patentanspruch gelöst.

Eine Projektierungsunterlage - in allgemeiner sowie in spezieller erfindungsgemäßer Bezeichnung, wie beispielsweise als Referenz- oder projektspezifische Projektierungsunterlage, - kann dabei
- ein Funktionsplan, insbesondere ein Regelungsfunktionsplan (kurz auch nur Regelfunktionsplan), oder ein Steuerungsfunktionsplan einer Komponente, beispielweise eines Antriebs, eines Ventils, einer Klappe, eines Motors o.ä. einer technischen Anlage,
- ein Bedieninterface (Bedienbild) für eine technische Anlage und/oder
- eine Beschreibung, insbesondere eine textuelle Beschreibung, einer technischen Anlage, insbesondere eine Beschreibung einer Funktionalität einer technischen Anlage,
sein.

Eine solche Projektierungsunterlage selbst kann wiederum aus meist mehreren, miteinander in Zusammenhang stehenden bzw. verknüpften Elementen aufgebaut sein, welche im Folgenden als sogenannte Projektierungsobjekte bezeichnet werden sollen.

So kann beispielsweise ein solches Projektierungsobjekt
- ein (Funktion-)Baustein (mit/ohne Verknüpfungen, insbesondere Verbindungen zu anderen Bausteinen) und/oder ein Objekt eines Funktionsplans,
- eine Verknüpfung bzw. eine Verknüpfungslinie und/oder eine (Teil-)Struktur in einem Funktionsplan und/oder zwischen (Funktions-)Bausteinen,
- ein grafisches Element eines Bedienbildes bzw. Bedieninterfaces oder
- ein Textbaustein einer Beschreibung
sein.

Gemäß dem erfindungsgemäßen Verfahren wird eine Referenz-Projektierungsunterlage - mit entsprechenden Projektierungsobjekten - für die technische Anlage erzeugt. Die Projektierungsobjekte dieser Referenz-Projektierungsunterlage können im Folgenden - insbesondere zur genaueren Zuordnung - auch als Referenz-Projektierungsobjekte bezeichnet sein.

Hierbei sei durch die Bezeichnung "Referenz" - bei der Projektierungsunterlage - und bei zugehörigen Projektierungsobjekten - zum Ausdruck gebracht, dass diese Projektierungsunterlage bzw. Projektierungsobjekte zu einem Vergleich mit anderen, insbesondere art- bzw. gattungs- und/oder strukturgleichen, Projektierungsunterlagen bzw. Projektierungsobjekten herangezogen werden können. Gegebenenfalls können hier Transformationen der zu vergleichenden Projektierungsunterlagen in vergleichbare bzw. übereinstimmende Datenstrukturen vorgesehen werden.

Solche Referenz-Projektierungsunterlagen können beispielsweise bei Modernisierungsprojekten von technischen Anlagen Funktionspläne der leittechnischen Altanlage oder bei Neubauprojekten funktionale Vorgaben des Herstellers der verfahrenstechnischen Anlage sein.

Auch kann eine solche Referenz-Projektierungsunterlage mittels digitaler Bildverarbeitung aus einer vorgegebenen Unterlage, beispielsweise einer in Papierform vorliegende Projektierungsunterlage, und/oder durch Auswertung digitaler Bildinformation (digitale Bilderkennung), insbesondere durch Auswertung von der mittels der digitalen Bildverarbeitung bearbeiteten, vorgegebenen Unterlage, erstellt werden.

Einfach ausgedrückt, es kann beispielsweise ein in Papierform vorliegender Referenz-(Funktions-)Plan einer technischen Anlage gescannt und dadurch eine Graphikdatei erzeugt werden. Diese Graphikdatei wird mit Hilfe einer automatischen Bilderkennung weiterbearbeitet, wodurch Projektierungsobjekte, d.h. die Referenz-Projektierungsobjekte, in der Referenz-Projektierungsunterlage identifiziert werden können.

Zu einer Verbesserung dieser digitalen Bildverarbeitung und Bilderkennung kann weiter vorgesehen sein, dass die digitale Information bzw. das digitalisierte Bild gefiltert wird. Hierdurch lassen sich Störungen und/oder ein Rauschen aus dem digitalisierten Bild beseitigen.

Auch kann bei der digitalen Bilderkennung eine Symbolbibliothek, in welcher vorgegebene Projektierungsobjekte, insbesondere Projektierungsobjekte verschiedener Referenz-Leittechniken, gespeichert sind, verwendet werden, anhand derer die Referenz-Projektierungsunterlage analysiert werden kann und Projektierungsobjekte - der Referenz-Projektierungsunterlage - im digitalisierten Bild identifiziert werden können.

Auch durch Einlesen digitaler Information bzw. Daten kann die Referenz-Projektierungsunterlage erzeugt werden.

Weiter wird bei der Erfindung ein Abgleich von einer - unter Verwendung von Standard-Projektierungsobjekten - erstellten projektspezifischen Projektierungsunterlage der technischen Anlage mit der Referenz-Projektierungsunterlage durchgeführt.

Dabei soll unter einem Standard-Projektierungsobjekt verstanden werden, dass ein solches für eine Vielzahl ("Maximalvariante") von Funktionalitäten von technischen Anlagen - für die Leittechniken zu projektieren sind - gültig ist.

Dieses kann bevorzugt derart realisiert sein, dass optionale (Funktion-)Bausteine und/oder Objekte eines Funktionsplans, optionale Verknüpfungen und/oder Strukturen/Teilstrukturen in einem Funktionsplan, optionale grafische Elemente eines Bedienbildes und/oder optionale Textbausteine einer Beschreibung vorgegeben sind.

Kurz, unter Verwendung von Standards, d.h. den Standard-Projektierungsobjekten, wird eine projektspezifische Projektierungsunterlage erstellt, welche dann mit der Referenz-Projektierungsunterlage abgeglichen wird.

Projektierungsobjekte dieser projektspezifischen Projektierungsunterlage können im Folgenden - insbesondere zur genaueren Zuordnung - auch als projektspezifische Projektierungsobjekte bezeichnet sein.

Unter der Erstellung der projektspezifischen Projektierungsunterlage aus den bzw. unter Verwendung der Standard-Projektierungsobjekte ist insbesondere zu verstehen, dass aus den Standard-Projektierungsobjekten - durch Anpassung an die zu projektierende Anlage - die projektspezifische Projektierungsunterlage - mit den - dann - projektspezifischen Projektierungsobjekten - für die Anlage erzeugt bzw. "zusammengebaut" wird.

Für die Anpassung kann dabei eine spezifische Beschreibung der zu projektierenden technischen Anlage herangezogen werden.

Eine solche spezifische Beschreibung der Anlage, für die die Leittechnik zu projektieren ist, kann eine oder mehrere Informationen zu dieser Anlage beinhalten. Anders ausgedrückt, über die - spezifische - Beschreibung wird eine Konfiguration (Variante) einer - bestimmten - zu projektierenden Anlage bestimmt.

Eine solche Information bzw. Beschreibung kann beispielsweise eine Anforderung bzw. Anforderungsangabe an die Anlage, eine Randbedingung für die Anlage, eine Funktion der Anlage, ein technischer Aufbau der Anlage, eine technische Komponente der Anlage, Bezeichnungen von Komponenten der Anlage oder ähnliche Charakteristika zu der technischen Anlage sein.

Anschaulich ausgedrückt, aus den Standard-Projektierungsobjekten wird die projektspezifische Projektierungsunterlage automatisch "zusammengebaut", wobei bei dem "Zusammenbau" (projekt-)spezifische Angaben aus einer spezifischen Beschreibung der zu projektierenden Anlage berücksichtigt werden können.

Durch den Abgleich - zwischen projektspezifischer Projektierungsunterlage und Referenz-Projektierungsunterlage - wird dann die erfindungsgemäße anlagenspezifische Projektierungsunterlage erstellt.

Projektierungsobjekte dieser anlagenspezifischen Projektierungsunterlage können im Folgenden - insbesondere zur genaueren Zuordnung - auch als anlagenspezifische Projektierungsobjekte bezeichnet sein.

Dieser Abgleich wird erfindungsgemäß unter Verwendung einer Abgleichskennzeichnung durchgeführt.

Unter Abgleich bzw. Abgleich unter Verwendung der Abgleichkennzeichnung im Sinne der Erfindung sei insbesondere zu verstehen, dass ein Vergleich von der projektspezifischer Projektierungsunterlage mit der Referenz-Projektierungsunterlage bzw. von jeweiligen Projektierungsobjekte aus diesen Projektierungsunterlagen durchgeführt wird, um Unterschiede oder Abweichungen zwischen diesen zu erkennen.

Anhand der Abgleichkennzeichnung wird dann entschieden, welches jeweilige Projektierungsobjekt, d.h. das projektspezifische Projektierungsobjekt oder das entsprechende Referenz-Projektierungsobjekt, - als anlagenspezifisches Projektierungsobjekt - in die anlagenspezifische Projektierungsunterlage übernommen und dadurch die anlagenspezifische Projektierungsunterlage erstellt wird.

Kurz bzw. vereinfacht ausgedrückt, über die Abgleichskennzeichnung wird festgelegt, ob der Standard, welcher - durch projektspezifische Anpassung - Niederschlag in der projektspezifischen Projektierungsunterlage gefunden hat, oder die Referenz - in die anlagenspezifische Projektierungsunterlage - übernommen werden soll.

Somit kann unter einer solchen Abgleichskennzeichnung im Allgemeinen eine Ranginformation verstanden werden, über welche beispielsweise eine Vor- bzw. Nachrangigkeit eines Standard-Projektierungsobjekts - bzw. dann dementsprechend folglich eines projektspezifischen Projektierungsobjekts - gegenüber einem (entsprechenden) Referenz-Projektierungsobjekt festgelegt wird.

Der Abgleich kann bevorzugt unter folgenden Prinzipien erfolgen:
- Soweit wie möglich sind "Standards" zu übernehmen, da hierdurch die durch eine Standardisierung erzielten Vorteile genutzt werden können.
- Dort wo notwendig, sind die "Referenzen" zu übernehmen, da Standards Anlagenkonfigurationen nicht bis in kleinste Detail vollständig abdecken können sowie außerhalb Standards liegende anlagenspezifische Vorgaben, beispielsweise des anlagentechnischen Herstellers, zu berücksichtigen sind.

Die erfindungsgemäße Vorrichtung weist ein Datenverarbeitungsmittel, insbesondere einer programmierten Recheneinheit, auf, welches derart eingerichtet ist, dass folgende Schritte durchführbar sind:
- Erzeugung einer Referenz-Projektierungsunterlage der technischen Anlage,
- Erstellung der anlagenspezifischen Projektierungsunterlage
   - durch einen unter Verwendung einer Abgleichskennzeichnung durchgeführten Abgleich von einer unter Verwendung von Standard-Projektierungsobjekten erstellten projektspezifischen Projektierungsunterlage der technischen Anlage mit der Referenz-Projektierungsunterlage.

Die Vorrichtung ist insbesondere geeignet zur Durchführung des erfindungsgemäßen Verfahrens oder einer dessen nachfolgend erläuterten Weiterbildungen.

Die Erfindung geht damit zunächst von der Verwendung von Standards bzw. von standardisierten Projektierungsobjekten aus, welche an die projektspezifische Konfiguration einer technischen Anlage angepasst werden.

Hierdurch stellt die Erfindung sicher, dass
- für eine Vielzahl von verschiedenen Projekten stets passende Standards zur Verfügung gestellt werden können, wobei gleichzeitig
- die Auswahl und projektspezifische Anpassung der passenden Standards durch einen Anwender schnell und einfach durchgeführt werden kann und
- eine einfache Wart- und Pflegbarkeit der Standards gegeben ist.

Damit erreicht die Erfindung folgende Vorteile:
- Kostenreduktion bei der Projektierung durch automatische Generierung von projektspezifischen Projektierungsunterlagen
- Kostenreduktion bei der Inbetriebnahme durch Wiederholung bereits bekannter Standards
- Erhöhung der Qualität durch wiederholten Einsatz bereits geprüfter und fehlerkorrigierter Strukturen
- Hohe Konformität zur spezifischen Anlage durch die Selektion der benötigten Variante des Standards.

Die Erfindung geht dann weiter von der Überlegung aus, dass die an die jeweiligen projektspezifischen Anforderungen angepassten Standards die jeweiligen anlagenspezifischen Anforderungen, beispielsweise vorgegeben durch einen verfahrenstechnischen Lieferanten, - wenn auch weitgehend - trotzdem nicht vollständig abdecken können.

Hierzu sieht dann die Erfindung den Abgleich der projektspezifischen Projektierungsunterlage mit der Referenz-Projektierungsunterlage, welche solche anlagenspezifischen Anforderungen eines verfahrenstechnischen Lieferanten beinhalten können, vor.

Damit erreicht die Erfindung eine hohe Konformität bei der erstellten anlagenspezifischen Projektierungsunterlage. D.h., diese passt exakt zur Anlagenkonfiguration.

Auch können dadurch Vorgaben, wie beispielsweise solche des verfahrenstechnischen Herstellers einer Anlage, automatisiert und vollständig umgesetzt werden können.

Die Erfindung erweist sich demzufolge in vielerlei Hinsicht besonders vorteilhaft.

Die Erfindung kombiniert einerseits die Vorteile aus einer Standardisierung mit andererseits der Möglichkeit, dort wo Standards nicht mehr greifen und/oder herstellerspezifische Vorgaben berücksichtigt werden müssen, diese anlagenspezifisch einfach umzusetzen zu können.

Die erfindungsgemäße Vorgehensweise ist auch automatisierbar. So kann durch die Erfindung auf Grund dieser automatisierbaren Vorgehensweise eine erhebliche Kostenreduktion bei der Projektierung erreicht werden. Auch die Qualität der Projektierung lässt sich auf Grund der automatisierten Vorgehensweise, insbesondere auf Basis geprüfter Strukturen, steigern.

Bevorzugte Weiterbildungen der Erfindung ergeben sich auch aus den abhängigen Ansprüchen.

Die beschriebenen Weiterbildungen beziehen sich sowohl auf das Verfahren als auch auf die Vorrichtung.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

### Spezifische Beschreibung

Die Erzeugung der spezifischen Beschreibung, insbesondere zur Auswahl und/oder zur Anpassung der Standard-Projektierungsobjekte, kann vorzugsweise aus unmittelbaren oder mittelbaren Benutzereingaben generiert werden, beispielsweise durch direkte Angabe von Information, durch Beantwortung von ja/nein-Fragen, durch multiple-choice-Angaben eines Benutzers oder durch Eingabe analoger Zahlenwerte.

Auch ein Einlesen von Information, insbesondere ein automatisiertes Einlesen von Information über eine Schnittstelle kann eine solche Erzeugung sein. Auch umfasst ein Erzeugen ein Zurückgreifen auf eine bereits vorhandene Information, insbesondere eine zentral oder auch dezentral gespeicherte Information.

Die erzeugte spezifische Beschreibung der Anlage kann dabei unter Verwendung bzw. in Form einer (Erfassungs-)Liste, beispielsweise einer (Varianten-)Definitions- und/oder einer Funktionsliste generiert werden bzw. vorliegen.

Über eine solche Varianten-Definitionsliste können bzw. kann beispielsweise der spezifische Aufbau einer verfahrenstechnischen Anlage (z.B. Kesseltyp der Kraftwerksanlage, Anzahl von Aggregaten o.ä.) und/oder zu erfüllende kundenspezifische Anforderungen (z.B. Kunde des VGB-Marktes) definiert sein.

Über eine solche Funktionsliste kann, beispielsweise mittels einer Kennzeichnung bzw. eines Kennzeichens, die - aus den Standards - zu erzeugende spezifische Projektierungsunterlage bzw. ein dazu gehöriges Projektierungsobjekt - eindeutig - einer verfahrenstechnischen Komponente der zu projektierenden Anlage, wie einem Aggregat, zugeordnet werden.

Insbesondere diese vereinfachte und automatische Generierung der spezifischen Beschreibung, beispielsweise durch Beantwortung einfacher Fragen in Projektierungslisten durch den Projekteur oder auch automatisches Einlesen von Informationen, spart Zeit und Kosten.

### Standard-Datenbank und Auswahl von Standard-Projektierungsobjekten (unter Verwendung der spezifischen Beschreibung)

Nach einer bevorzugten Weiterbildung ist vorgesehen, dass die Standard-Projektierungsobjekte in einem Archiv gespeichert sind.

Unter einem solchen Archiv soll dabei ganz allgemein eine Verfügbarkeit vorgegebener Information, in diesem Fall von den vorgegebenen Standard-Projektierungsobjekten, in beliebiger Form und/oder an beliebiger Stelle - oder auch dezentral an beliebigen Stellen - verstanden werden.

So kann ein solches Archiv beispielsweise eine Bibliothek, eine Datenbank o.ä. sein, wo die zur Verfügung stehende Information in beliebiger Form, beispielsweise auf Papier oder auch elektronisch, zur Verfügung steht.

In einem solchen Archiv stehen die vorgegebenen Standard-Projektierungsobjekte zur Auswahl zur Verfügung.

Vereinfacht und anschaulich gesehen, stellt so ein Archiv eine Standard-Datenbank dar, in der für jede Projektierungsunterlage ein entsprechender Standard in einer für eine Vielzahl von technischen Anlagen - für die Leittechniken zu projektieren sind - geltenden Ausgestaltung ("Maximalstandard", "Maximalvariante") vorgegeben ist. D.h., die Projektierungsobjekte der Projektierungsunterlagen stehen in dieser Maximal-Datenbank in einer Maximalvariante, d.h. als Standard-Projektierungsobjekte, - zur Auswahl und Anpassung/Spezifizierung - zur Verfügung.

Dieses kann bevorzugt derart realisiert sein, dass optionale (Funktion-)Bausteine und/oder Objekte eines Funktionsplans, optionale Verknüpfungen und/oder Strukturen/Teilstrukturen in einem Funktionsplan, optionale grafische Elemente eines Bedienbildes und/oder optionale Textbausteine einer Beschreibung vorgegeben sind.

Die Auswahl von Standard-Projektierungsobjekten aus dem Archiv - zur Erstellung der projektspezifischen Projektierungsunterlage - kann unter Verwendung der spezifischen Beschreibung der Anlage erfolgen.

Zunächst kann dabei die spezifische Beschreibung ausgewertet werden, wodurch definiert wird, welcher Standard in welcher Variante im Projekt benötigt wird.

Insbesondere über die Erfassungslisten, beispielsweise über die Varianten-Definitionsliste, kann für die Projektierungsunterlagen, d.h. für Funktionspläne, Bedienbilder und Beschreibungen, definiert sein, welche Variante eines bestimmten Standards im Projekt benötigt wird. Entsprechend dieser Definition können dann die für die projektspezifische Projektierungsunterlage benötigten Projektierungsobjekte aus dem Archiv ausgewählt werden.

Weiterhin kann vorgesehen sein, dass es für die Projektierungsobjekte jeweils nur eine einzige "Maximalvariante" im Archiv gibt. Die Wartung und Pflege des Archivs bzw. der Projektierungsobjekte wird dadurch erheblich vereinfacht.

Die Qualität der Projektierung kann weiter deutlich erhöht werden, wenn die projektspezifischen Projektierungsunterlagen aus immer denselben Standard-Projektierungsobjekten erzeugt werden, die dann in einer Vielzahl von Anlagen bereits erprobt wurden und sich bewährt haben.

Projektierungsobjekte, die projektspezifisch nicht benötigt werden, treten in der projektspezifischen Projektierungsunterlage nicht auf und belasten daher auch nicht Ressourcen des Leitsystems.

Die spezifische Projektierungsunterlage enthält letztlich nur die Projektierungsobjekte (in spezifischer Verknüpfung), die im spezifischen Projekt auch benötigt werden und bleibt daher übersichtlich und gut hantierbar.

### Anpassung Standard an Projekt

Bei der Erstellung der projektspezifischen Projektierungsunterlage aus den - aus dem Archiv ausgewählten - Standard-Projektierungsobjekten (Anpassung) können die spezifische Beschreibung sowie auch (weitere) Logiken, insbesondere Binärlogiken, und/oder Regeln der bzw. "hinter" den Projektierungsobjekten ausgewertet werden.

Ausgehend davon kann dann die Anpassung (Spezifizierung) der Standard-Projektierungsobjekte zur Erstellung der projektspezifischen Projektierungsunterlage insbesondere erfolgen durch
- Löschen, Ausblenden und/oder Anzeigen von Strukturen bzw. Strukturelementen und/oder Teilstrukturen und/oder Verbindungen in Funktionsplänen, Bedienbildern oder Beschreibungen
- Löschen, Anzeigen und/oder Ausblenden von Teilen bzw. (Teil-)Objekten von Funktionsplänen, Bedienbildern oder Beschreibungen, die spezifisch nicht benötigt bzw. benötigt werden,
- Erstellen von spezifischen Verbindungen bzw. Verknüpfungen in Funktionsplänen, Bedienbildern oder Beschreibungen
- (Neu-)Verschalten oder Umlegen von Schaltern in Funktionsplänen,
- (Um-)Platzieren spezifischer Projektierungsobjekte
- Setzen von Parametern auf bestimmte Werte.

Die Logik bei, der Anpassung, beispielsweise zum Umlegen von Schaltern bzw. zum Ein- und Ausblenden von Objekten, kann dabei als logische Verknüpfung von einer oder mehreren Regeln in der spezifischen Beschreibung aufgebaut sein (z.B. Schalter umlegen, falls Regel x AND NOT Regel y OR Regel z = TRUE). Es ist ebenso möglich, dass Umschaltkriterien aus in der spezifischen Beschreibung angegebenen Zahlenwerten dortiger Variablen abgeleitet werden (z. B. Regel x = 2, Regel y > 3 o.ä.).

Auch ist es vorstellbar, neue Strukturen bzw. Strukturelemente und/oder Teilstrukturen, neue Objekte, die spezifisch benötigt werden, neue Verbindungen bzw. Verknüpfungen, neue Schalter oder Schalterverbindungen zu generieren - und diese in die projektspezifische Projektierungsunterlage mit einfließen zu lassen.

Auch könnten diese "Neuschöpfungen" dann - wieder in Maximalvariante - in das Archiv mit eingepflegt werden. Anders ausgedrückt, neue Varianten von Standards können erzeugt und in der Datenbank abgelegt werden.

Hierdurch können immer aktuelle, geprüfte Standards gewährleistet werden. Auch eine einfache Wart- und Pflegbarkeit der Standards ist dadurch gegeben.

Die projektspezifische Anpassung bei Erstellung der projektspezifischen Projektierungsunterlagen kann automatisch "auf Knopfdruck" erfolgen, ohne dass der Projekteur sich selbst als Experte mit Details der (Standard-)Projektierungsobjekte im Archiv auseinandersetzen muss. Hier bietet darüber hinaus die Verknüpfung der Regeln mit den Projektierungsobjekten die Möglichkeit schon vordefinierte Strukturen zu schaffen.

### Abgleichkennzeichnung (Kennzeichnung als Kernelement incl. spezielle Kennzeichnung und Abgleichsgrad)

Nach einer bevorzugten Weiterbildung ist vorgesehen, dass die vorgebbare Abgleichskennzeichnung einen Rang, insbesondere eine Vorrangigkeit, eines Standard-Projektierungsobjekts (Kernobjekt) beschreibt. So lassen sich beispielsweise - bei Kennzeichnung eines Standard-Projektierungselements als vorrangig - Kernobjekte definieren, welche - aus dem Standard (über die projektspezifische Projektierungsunterlage) - unbedingten Eingang in die anlagenspezifische Projektierungsunterlage finden. Eine solche Kennzeichnung für ein (Standard-)Projektierungsobjekt kann auch bereits in dem Archiv vorgenommen werden.

Weiterhin ist es zweckmäßig, diese Kennzeichnung von Standard-Projektierungsobjekte in - aus diesen Standard-Projektierungsobjekten generierten - "Nachfolger" weiterzuvererben, so dass auch dort die Kennzeichnung zur Verfügung steht.

Auch kann vorgesehen sein, dass die vorgebbare Abgleichskennzeichnung einen Rang, insbesondere eine Vorrangigkeit, mindestens einer Funktionalität der technischen Anlage (Abgleichsgrad für (Teil-)Funktionalitäten) beschreibt.

Eine solche Funktionalität bzw. Teilfunktionalität kann ein Regelungskonzept, eine Sollwertbeschaltung, eine Störgrößenaufschaltung, ein Steuerungskonzept, eine Schutzbeschaltung und/oder eine Verwendung nicht standardisierter Messgrößen sein.

So lässt sich beispielsweise die Vorrangigkeit von Standards bei einer solchen betroffenen Funktionalität bzw. Teilfunktionalität definieren. D.h., für die betroffene Funktionalität bzw. Teilfunktionalität werden die entsprechenden Projektierungsobjekte aus dem Standard übernommen.

Insbesondere kann hier vorgesehen werden, dass die vorgebbare Abgleichskennzeichnung den Rang mehrerer Funktionalitäten, beispielsweise in (binär-)codierter Form, beschreibt.

Ferner kann auch vorgesehen sein, dass die vorgebbare Abgleichskennzeichnung nicht fest, sondern - von bestimmten Parametern - abhängig ist. So können/kann beispielsweise der Rang des Standard-Projektierungsobjekts und/oder der Rang der Funktionalität abhängig von einer Variante der technischen Anlage sein (projektspezifischer/angepasster Rang für projektspezifische Variante des Standards).

Vereinfacht bzw. anschaulich ausgedrückt, die Vorrangigkeit eines Projektierungsobjekts bzw. einer Funktionalität kann abhängig sein von einer projektspezifischen Variante des Standards.

Auch kann vorgesehen sein, dass ein Projektierungsobjekt, welches nach der Abgleichskennzeichnung eine bestimmte vorgebbare Abgleichskennzeichnung aufweist, zusätzlich mit einer speziellen Abgleichskennzeichnung beschrieben wird und der Abgleich unter Verwendung auch der speziellen Abgleichskennzeichnung erfolgt.

So kann hier beispielsweise ein Kernobjekt eine zusätzliche spezielle Kennzeichnung erhalten, wenn es eine besondere Funktion, beispielsweise eine Funktionalität, wie die Sollwertbeschaltung oder die Schutzbeschaltung, erfüllt.

Auch diese zusätzliche spezielle Kennzeichnung kann varianten-abhängig sein. Auch kann diese ebenfalls bereits in dem Archiv vorgenommen werden.

Weiterhin ist es zweckmäßig, auch diese spezielle Kennzeichnung bei den Standard-Projektierungsobjekten - in projektspezifische Projektierungsobjekte - weiterzuvererben.

### Abgleichsstrategie, neue Projektierungsobjekte in der anlagenspezifischen Projektierungsunterlage

Weiterhin kann vorgesehen sein, dass bei dem Abgleich zunächst alle - als vorrangig gekennzeichneten - projektspezifischen Projektierungsobjekte, d.h. Projektierungsobjekte in der projektspezifischen Projektierungsunterlage, welchen - als vorrangig gekennzeichneten - Standard-Projektierungsobjekten zu Grunde liegen (Vererbung der Kennzeichnung/des Rangs auf das projektspezifische Projektierungselement), der anlagenspezifischen Projektierungsunterlage zugeordnet und dort - in Analogie zum Standard - verwendet werden. So können beispielsweise Verbindungen zwischen Funktionsbausteinen dort in Analogie zu einem Standardfunktionsplan wieder hergestellt werden.

Für Lücken in der anlagenspezifischen Projektierungsunterlage können dann jeweils einander entsprechende Projektierungsobjekte der projektspezifischen Projektierungsunterlage und der Referenz-Projektierungsunterlage unter Verwendung der Abgleichskennzeichnung verglichen werden und ein jeweiliges als vorrangig festgestelltes Projektierungsobjekt als das anlagenspezifische Projektierungsobjekt für die Lücke der anlagenspezifischen Projektierungsunterlage ausgewählt bzw. dorthin übernommen werden. Weitere Lücken in der anlagenspezifischen Projektierungsunterlage können dann mit Referenz-Projektierungsobjekten geschlossen werden.

Auch können bei dem Abgleich von projektspezifischer und Referenz-Projektierungsunterlage zunächst jeweils alle einander entsprechenden Projektierungsobjekten aus der projektspezifischen Projektierungsunterlage und aus der Referenz-Projektierungsunterlage unter Verwendung der Abgleichskennzeichnung verglichen werden und das jeweilig vorrangige Projektierungsobjekt als das anlagenspezifische Projektierungsobjekt für die anlagenspezifische Projektierungsunterlage ausgewählt bzw. dorthin übernommen werden. Sind dann noch Lücken in der anlagenspezifischen Projektierungsunterlage, so können diese dann mit weiteren Referenz-Projektierungsobjekten geschlossen werden.

Nach einer weiteren bevorzugten Weiterbildung wird in der anlagenspezifischen Projektierungsunterlage auch ein solches Referenz-Projektierungsobjekt aufgenommen, für welches bei dem Abgleich kein entsprechendes projektspezifisches Projektierungsobjekt ermittelt wurde. Vereinfacht ausgedrückt, für dieses Referenz-Projektierungsobjekt liegt - beispielsweise durch Feststellung bei Durchführung des Abgleichs - kein entsprechender Standard vor, so dass dieses Referenz-Projektierungsobjekt aus der Referenz-Projektierungsunterlage in die anlagenspezifische Projektierungsunterlage übernommen wird.

Gerade hierdurch lassen sich - außerhalb der Standards liegende - Vorgaben eines verfahrenstechnischen Herstellers berücksichtigen.

Weiter kann hier auch vorgesehen sein, dass bei der Aufnahme dieses Referenz-Projektierungsobjekts in die anlagenspezifische Projektierungsunterlage eine Anpassung dieses Referenz-Projektierungsobjektes erfolgt.

Entspricht beispielsweise ein solches aufzunehmende Referenz-Projektierungsobjekt nicht einer übergeordneten Projektierungsphilosophie, so kann durch diese Anpassung eine entsprechende Transformation vorgenommen werden.

### Datenstruktur und Transformation in spezifische Repräsentanz

Bevorzugt kann auch vorgesehen sein, dass die projektspezifische Projektierungsunterlage und die Referenz-Projektierungsunterlage dieselbe, analysierbare (Daten-)Struktur - für den erfindungsgemäßen Abgleich - aufweisen bzw. in eine solche - für den Abgleich -, insbesondere aus einer darstellbaren, systemspezifischen Repräsentanz, transformiert werden (Transformation in abgleichsfähige und datenförmige Repräsentation).

Bei dem Abgleich können dann - sehr einfach, weil identische analysierbare (Daten-)Strukturen bei der projektspezifischen und er Referenz-Projektierungsunterlage vorliegen - jeweils sich entsprechende und zu vergleichende bzw. abzugleichende Projektierungsobjekte aus der projektspezifischen Projektierungsunterlage und aus der Referenz-Projektierungsunterlage ermittelt bzw. erkannt werden.

Auch kann hierdurch erkannt werden, wo eben keine sich entsprechenden Projektierungsobjekte von projektspezifischer und Referenz-Projektierungsunterlage vorliegen bzw. vorhanden sind. Kurz vereinfacht ausgedrückt, es wird erkannt, wo die Referenz über den Standard hinausgeht.

Besonders bevorzugt kann die analysierbare (Daten-)Struktur in Form von einer Liste erstellt werden bzw. vorliegen. In einer solchen Liste können auch Parameterwerte zu den (projektspezifischen/Referenz-)Projektierungsobjekten abgespeichert werden.

Vereinfacht ausgedrückt, es werden für die projektspezifische Projektierungsunterlage und die Referenz-Projektierungsunterlage jeweils entsprechende Listen mit jeweils allen Projektierungsobjekten - und gegebenenfalls weiteren Parametern - erstellt (abgleichsfähige und datenförmige Repräsentationen) - und diese abgeglichen.

Insbesondere kann über solche Listen einem Datenverlust bei Transformation in die abgleichfähigen Strukturen von projektspezifischer und Referenz-Projektierungsunterlage vorgebeugt werden.

Beim Abgleich kann dann wieder eine solche Liste, d.h. eine anlagenspezifische Projektierungsliste, mit entsprechender (Daten-)Struktur erzeugt werden, welche dann die anlagenspezifische Projektierungsunterlage mit den anlagenspezifischen Projektierungsobjekten repräsentiert.

### Transformation in systemspezifische Repräsentanz

Bevorzugt kann auch vorgesehen sein, die erstellte anlagenspezifische Projektierungsunterlage mit den anlagenspezifischen Projektierungsobjekten (wieder) in eine spezifische Darstellung inkl. eines Designs des Leitsystems der technischen Anlage (zurück) zu transformieren.

Anschaulich bzw. vereinfacht ausgedrückt, wo zunächst für den Abgleich die projektspezifische bzw. Referenz-Projektierungsunterlage aus der systemspezifischen, darstellbaren Repräsentanz in die abgleichsfähige und datenförmige Repräsentation transformiert wurde, kann nach dem Abgleich die erstellte anlagenspezifische Projektierungsliste wieder in die systemspezifische, darstellbare Repräsentanz (zurück) transformiert werden.

### Einsatz in Leittechnik

Weiterhin ist bevorzugt vorgesehen, dass die erstellte anlagenspezifische Projektierungsunterlage für die zu projektierende Leittechnik der Anlage, insbesondere für die zu projektierende Kraftwerksleittechnik des Kraftwerks, eingesetzt bzw. verwendet wird, und/oder die Anlage, insbesondere das Kraftwerk, unter Verwendung der erstellten anlagenspezifischen Projektierungsunterlage gesteuert, geregelt und/oder überwacht wird.

Hierzu kann insbesondere die anlagenspezifische Projektierungsunterlage auf einem Kraftwerksleitrechner implementiert bzw. installiert werden, um dort die Steuerung, Regelung und/oder Überwachung der Anlage bzw. des Kraftwerks auszuführen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Verfahren und/oder mit der Vorrichtung gemäß dem jeweiligen unabhängigen Anspruch kombinierbar.

In einer Figur ist ein Ausführungsbeispiel der Erfindung dargestellt, welches im Weiteren näher erläutert wird.

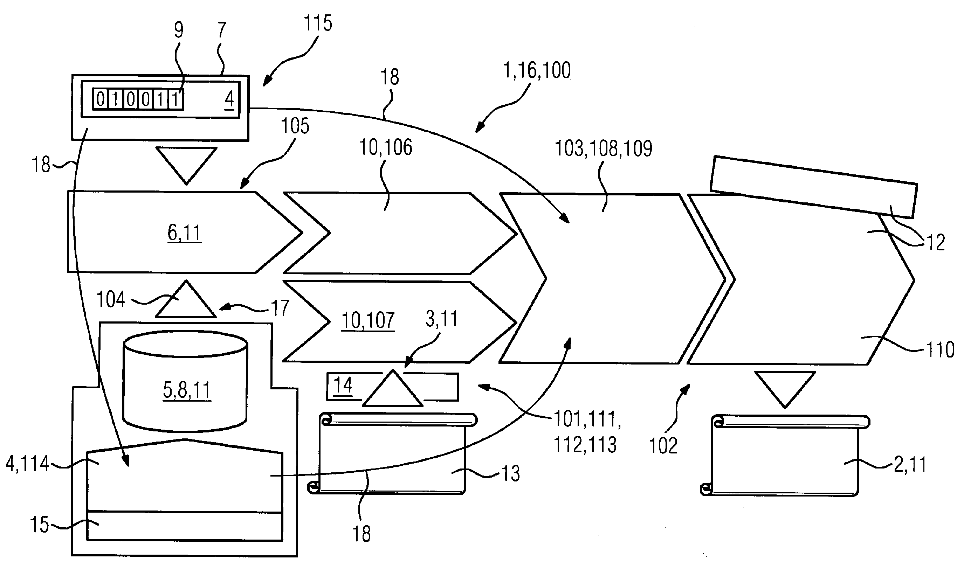

Es zeigt
- FIG 1: eine Übersicht eines Systems zu einer automatischen Erzeugung von anlagenspezifischen Projektierungsunterlagen, wie von Funktionsplänen, für eine Kraftwerksleittechnik gemäß einem Ausführungsbeispiel (ART-E).

Ausführungsbeispiel: System zur automatischen Erzeugung von Projektierungsunterlagen mittels Maximalstandards und anlagenspezifischem Abgleich mit Referenzplänen (Advanced Rapid Technology Engineering [ART-E] 1)

FIG 1 zeigt eine Übersicht eines Systems 1 - mit dessen wesentlichen Bestandteilen/Komponenten, Funktionen und (funktionelle) Zusammenhängen - zur automatischen Erzeugung 100 von Projektierungsunterlagen 2, hier von (anlagenspezifischen) Funktionsplänen 2, für eine Kraftwerksleittechnik 100.

Bei diesem (Projektierungs-)System 1, im Folgenden kurz als ART-E (Advanced Rapid Technology Engineering) 1 bezeichnet, werden anlagenspezifischen Funktionspläne 2 durch automatischen Abgleich 103 von aus Standards 17 generierten 105 Funktionsplänen 6, sogenannten projektspezifischen Funktionsplänen 6, mit Referenzfunktionsplänen 3 erzeugt 100.

Solche Referenzfünktionspläne 3 können beispielsweise bei Modernisierungsprojekten von technischen Anlagen Funktionspläne der leittechnischen Altanlage oder bei Neubauprojekten funktionale Vorgaben des Herstellers der verfahrenstechnischen Anlage sein.

ART-E ist dabei als durch einen Benutzer ausführbare Software auf einer programmierbaren Recheneinheit 16 implementiert.

### Standard-Datenbank 8

ART-E 1 weist, wie FIG 1 zeigt, als eine wesentliche Komponente eine Standard-Datenbank 8 auf, in der für jeden Funktionsplan ein entsprechender Standard 17 abgelegt ist.

Jeder Standard 17 ist dabei als Maximalvariante aufgebaut, d.h. alle möglichen Funktionen, die in verschiedenen (Projektierungs-)Projekten erforderlich sein könnten, werden in diesem einen Standard 17 mit aufgenommen.

Jeder Funktionsplan 17 bzw. jeder Standard 17 setzt sich zusammen aus (Standard-)Projektierungsobjekten 5 bzw. (Standard-)Funktionsplanelementen 5, welche beispielsweise Bausteine und/oder Verbindungslinien, grafische Elemente oder Text-/Beschreibungsbausteine sind.

### Variantendefinition/-liste 7

Wie FIG 1 weiter zeigt, ermöglicht ART-E 1 die Erstellung 115 einer spezifische Beschreibung 7, einer sogenannte Varianten-Definitionsliste 7, in denen bzw. in der angeben werden kann, welcher spezifische Aufbau einer zu projektierenden verfahrenstechnischen Anlage (z. B. Kesseltyp der Kraftwerksanlage, Anzahl von Aggregaten o. ä.) vorliegt und welche kundenspezifischen Anforderungen zu erfüllen sind (z. B. Kunde des VGB-Marktes).

### Kennzeichnung 114 von Kernelementen (inklusive spezieller Kennzeichnung 15)

In der Standard-Datenbank 8 ist, wie FIG 1 verdeutlicht, jedes (Standard-)Funktionsplanelement 5 dahingehend gekennzeichnet 114 (Kennzeichnung 4), ob sich dieses Element zur Verwendung im (endgültigen) anlagenspezifischen Funktionsplan 2 durchsetzen muss. Elemente, die so gekennzeichnet sind 4, dass sie sich durchsetzen müssen, d.h. dass sie im endgültigen anlagenspezifischen Funktionsplan 2 enthalten sind, werden als Kernelemente bezeichnet.

Die Kennzeichnung 4 eines (Standard-)Funktionsplanelements 5 (als durchzusetzendes bzw. nicht - durchzusetzendes Element) ist dabei nicht fest; vielmehr besteht die Möglichkeit, die Elementkennzeichnung 4 mit Regeln aus der Varianten-Definitionsliste 7 zu verknüpfen (Verknüpfung 18).

Ob sich ein Standard-Funktionsplanelement 5 unbedingt zur Verwendung auf einem endgültigen anlagenspezifischen Funktionsplan 2 durchsetzen muss oder nicht, kann damit von der projektspezifischen Variante des Standards 17 abhängig gemacht werden.

Weiterhin sieht ART-E 1, wie FIG 1 zeigt, eine spezielle Kennzeichnung 15 vor.

Die gekennzeichneten Kernelemente erhalten, wo immer notwendig, eine zusätzliche spezielle Kennzeichnung 15, wenn sie eine besondere Funktion erfüllen. Es werden beispielsweise die Funktionsbausteine bzw. die Ports der entsprechenden Funktionsbausteine gekennzeichnet, die mit dem Sollwert eines Regelkreises beschaltet sind.

Diese Information wird benötigt, um den Abgleich 103 mit den Referenzplänen 3 - z.B. bei Abgleich 103 der Sollwertbeschaltung - auf einfache Art und Weise durchführen zu können.

Zur speziellen Kennzeichnung 15 gehört auch die Kennzeichnung von Gesamtplänen als Regelungs- oder als Steuerungsplan.

### Abgleichsgrad 4

Wie weiter FIG 1 verdeutlicht, wird bei ART-E 1 über die Varianten-Definitionsliste 7 ein sogenannter Abgleichgrad 4 angegeben. Über diesen ist die Kennzeichnung 4 von Standard-Funktionsplanelementen 5 als Kernelemente beeinflussbar.

Der Abgleichsgrad 4 wird wie FIG 1 verdeutlicht als sechsstellige Zahl im Dualsystem ausgedrückt. Jede Ziffer der Dualzahl bezieht dabei sich auf eine Teilfunktionalität 9 eines Funktionsplans 2, 3, 6.

Als Teilfunktionalitäten 9 werden separat betrachtet: Regelungskonzept, Sollwertbeschaltung, Störgrößenaufschaltung, Steuerungskonzept, Schutzbeschaltung, Verwendung nicht standardisierter Messgrößen.

Ein Wert von "0" für eine Teilfunktionalität 9 bedeutet, dass für die betroffene Teilfunktionalität 9 Funktionsplanelemente bzw. Strukturen aus den Standard-Funktionsplänen 17 als endgültige Logiken übernommen werden. Dagegen bedeutet ein Wert von "1", dass für die betroffene Teilfunktionalität 9 die Funktionsplanelemente bzw. die Strukturen aus den Referenzplänen 3 als endgültige Logiken übernommen und die entsprechenden Strukturen aus den Standard-Funktionsplänen 17 verworfen werden.

Die Verwendung des Abgleichgrades 4 sei an drei Beispielen näher erläutert:
Ein Abgleichsgrad 4 von "000000" bedeutet, dass beim Abgleich 103 die aus den Standards 17 generierten Funktionspläne 6 bzw. deren Elemente vollständig als die endgültige Pläne 2 bzw. in die endgültigen Pläne 2 übernommen werden. Anschaulich ausgedrückt, es wird kein Abgleich durchgeführt, alle aus den Standards 17 generierten Funktionspläne 6 bzw. deren Elemente werden vollständig als endgültige Pläne 2 übernommen.

Der Abgleichsgrad "111111" bedeutet, dass ein vollständiger Abgleich 103 durchgeführt wird. Die Referenzpläne 3 bzw. deren Elemente werden vollständig als endgültige Pläne 2 übernommen, die Standardpläne 17 bzw. die aus den Standards 17 generierten Funktionspläne 6 werden verworfen.

In den meisten Fällen wird man mit dem Abgleichsgrad 4 "010011" arbeiten. Bei diesem Abgleichsgrad 4 wird bei genannten Teilfunktionalitäten 9 das Regelungskonzept inklusive der Störgrößenaufschaltung wie im Standard 17 vorgegeben umgesetzt, die Sollwertbeschaltung jedoch aus den Referenzplänen 3 übernommen. Auch das Steuerungskonzept wird wie im. Standard 17 vorgegeben umgesetzt, die Schutzbeschaltung der Antriebe jedoch aus den Referenzplänen 3 übernommen. Werden in den Referenzplänen 3 Messgrößen verwendet, die in den Standardplänen 17 nicht definiert sind, werden die entsprechenden Elemente bzw. Teilstrukturen aus den Referenzplänen 3 übernommen.

### Generierung 105 projektspezifischer Funktionspläne 6

Zur Generierung 105 der projektspezifischer Funktionspläne 6 werden bei ART-E 1, wie FIG 1 schematisch verdeutlicht, anhand der Varianten-Definitionsliste 7 diejenigen Standard-Funktionsplaneelemente 5 aus der Standard-Datenbank 8 ausgewählt 104, die für eine zu projektierende Anlage einschlägig sind.

Weiter werden dann die ausgewählten Standard-Funktionsplanelemente 5 anhand der Varianten-Definitionsliste 7 projektspezifisch angepasst und daraus die projektspezifische Funktionspläne 6 generiert 105.

Bei der Generierung 105 werden auch die Verknüpfungen der Kennzeichnungen 4 für die Kernelemente mit den Regeln aus der Varianten-Definitionsliste 7 ausgewertet. Entweder hat ein Standard-Funktionsplanelement 5 eine feste Kennzeichnung 4 oder die Kennzeichnung 4 wird entsprechend der Angaben in der Varianten-Definitionsliste 7 festgelegt.

In jedem Fall wird die Kennzeichnung 4 inklusive der speziellen Kennzeichnung 15 auf das entsprechende (projektspezifische) Funktionsplanelement im projektspezifischen Funktionsplan 6 vererbt.

### Transformation 106 der projektspezifischen Funktionspläne 6 in eine datenförmige Repräsentation 10

Wie weiter FIG 1 zeigt werden bei ART-E 1 die aus den Standards 17 erzeugten projektspezifischen Funktionspläne 6 inklusive der Kennzeichnungen 4, 15 der Funktionsplanelemente in eine datenförmige Repräsentation 10 transformiert 106.

D.h., es wird eine Liste 10 aller Funktionsblöcke und aller Verbindungen eines projektspezifischen Funktionsplans 6 erstellt (datenförmige Repräsentanz 10) 106. In der Liste 10 werden auch alle Parameterwerte der Funktionsblöcke abgespeichert, so dass durch die Transformation 106 kein Datenverlust entsteht.

### Erzeugung 101 der Referenz-Funktionspläne 3

Referenz-Funktionspläne 3 stehen als Papiervorlagen 13 - mit einer für eine digitale Bildverarbeitung (Scannen) 111 hinreichenden Qualität - zur Verfügung. In diesen "hardcopy"-Referenz-Funktionsplänen 13 sind die Automatisierungsfunktionen (Funktionsplanelemente 11) einer (digitalen) Leittechnik dargestellt.

Die "hardcopy" - Referenz-Funktionsplänen 13 werden gescannt 111, wodurch eine entsprechende Graphikdatei generiert wird. Diese durch das Scannen 111 erzeugte Graphikdatei wird mit Hilfe einer digitalen Bilderkennung 112 weiter verarbeitet.

Zunächst werden - durch entsprechende digitale (Signal-)Filterung 113 - Störungen/Rauschen beseitigt, wodurch die tatsächliche Nutzinformation des Referenz-Funktionsplans 3 selektiert wird.

Auf Basis einer Symbolbibliothek 14 werden die in der Graphik enthaltenen Funktionsplanelemente, wie Funktionsbausteine und deren Verbindungen, identifiziert 112 und einem entsprechendem Standard-Funktionsplanelement 5 zugeordnet 112. Die Zuordnung erfolgt hierbei nicht nur für den Funktionsbaustein selbst, sondern auch bezüglich der Informationen zu den Bausteinports.

### Transformation 107 der Referenz-Funktionspläne 3 in die datenförmige Repräsentation 10

Die aus der Bilderkennung 112 ermittelten Informationen bezüglich der Referenz-Funktionsplanelemente, d.h. die digital aufbereiteten Referenz-Funktionspläne 3, werden, wie FIG 1 zeigt, in die gleiche datenförmige Repräsentation 10 wie die projektspezifischen Funktionspläne 6 transformiert 107.

D.h., auch für die Referenz-Funktionspläne 3 wird eine entsprechende Liste 10 aller Funktionsblöcke und aller Verbindungen erstellt 107 (datenförmige Repräsentanz 10).

### Automatischer Abgleich 103

Es wird, wie FIG 1 verdeutlicht, ein automatischer Abgleich 103 der - aus den Standards 17 generierten 105 - projektspezifischen Funktionspläne 6 mit den Referenz-Funktionsplänen 3 - auf Ebene der datenförmigen Repräsentanten 10 der Pläne 3, 6 - durchgeführt.

Die datenförmigen Repräsentanten 10 der projektspezifischen Funktionspläne 6 und der Referenz-Funktionspläne 3 werden dabei automatisch analysiert 108.

Im Rahmen dieser Analyse 108 wird unter Berücksichtigung 18 der Kennzeichnung 4, inklusive der speziellen Kennzeichnung 15, der Kernelemente wie des Abgleichsgrads 4 ermittelt 109, welche Teile der aus den Standards 17 erzeugten 105 projektspezifischen Funktionspläne 6 und welche Teile der Referenz-Funktionspläne 3 auf den endgültigen anlagenspezifischen Funktionsplänen 2 enthalten sind (automatischer Abgleich 103 zwischen "projektspezifiziertem Standard" und "Referenz").

So werden aus den projektspezifischen Funktionsplänen 6, die Funktionsplanelemente bzw. Funktionsbausteine herausgesucht 109, welche (auch Varianten spezifisch) als Kernelemente gekennzeichnet sind. Diese werden dem endgültigen anlagenspezifischen Funktionsplan 2 zugeordnet 109. Die Verbindungen zwischen diesen Funktionsplanelementen werden in Analogie zum Standard 17 hergestellt.

Falls nicht alle Funktionsbausteine im projektspezifischen Funktionsplan 6 als Kernelemente gekennzeichnet waren, werden die entstandenen Lücken mit Bausteinen aus dem Referenz-Funktionsplan 3 geschlossen 109.

Je nachdem welcher Abgleichsgrad 4 vorgegeben wurde, sind hierzu folgende Schritte vorzunehmen 103, 109:

### Abgleich Regelungskonzept

Sofern es sich um einen Regelungsplan handelt, wird der komplette Referenzplan 3 übernommen. Die Unterscheidung zwischen Regelungs- und Steuerungsplan erfolgt über die spezielle Kennzeichnung 15 des Standardplanes 17.

### Abgleich Sollwertbeschaltung

Die Sollwertbeschaltung wird im Referenzplan 3 identifiziert. Da das Kennzeichen/Name des Istwertes aus der Generierung 104 des Standardplanes 17 und der dortigen Kennzeichenzuordnung 114 bereits bekannt ist, kann zunächst nach dem Istwert im Referenzplan 3 gesucht werden. Das Signal, mit dem der Istwert verglichen wird, ist der Sollwert. Die komplette Schaltung zur Erzeugung des Sollwertes im Referenzplan 3 wird identifiziert 109 und dem endgültigen Funktionsplan zugeordnet 109. Alle Verbindungslinien innerhalb dieser Schaltung werden in Analogie zum Referenzplan 3 wieder hergestellt. Das Sollwertsignal wird mit allen Ports, die im Standardplan 17 bzw. projektspezifischen Plan 6 mit dem Sollwert beschaltet waren, verbunden. Aus der speziellen Kennzeichnung 15 der Kernelemente ist bekannt, welche Bausteinports hiervon betroffen sind.

### Abgleich Störgrößenaufschaltung

Die Störgrößenaufschaltung wird im Referenzplan 3 identifiziert 109. Das Kennzeichen/Name der Störgröße ist aus der Generierung 104 des Standardplanes 17 und der dortigen Kennzeichenzuordnung 114 bereits bekannt. Die komplette Schaltung zur Verarbeitung der Störgröße im Referenzplan 3 wird identifiziert und dem endgültigen Funktionsplan 2 zugeordnet.

Ggf. wird eine Transformation 109 der Schaltung derart durchgeführt, dass sie mit dem Standardplan 17 vereinbar wird. Eine Aufschaltung der Störgröße auf den Reglerausgang wird beispielsweise zur Einkopplung am Reglereingang transformiert 109. Alle entsprechenden Verbindungslinien werden in Analogie zum Referenzplan 3 hergestellt. Das so ermittelte Signal wird an einer dafür vorgesehenen Stelle des Standardplanes 17 eingekoppelt. Aus der speziellen Kennzeichnung 15 der Kernelemente ist bekannt, welche Stelle hierzu verwendet werden kann.

### Abgleich Steuerungskonzept

Sofern es sich um einen Steuerungsplan handelt, wird der komplette Referenzplan 3 übernommen. Die Unterscheidung zwischen Regelungs- und Steuerungsplan erfolgt über die spezielle Kennzeichnung 15 des Standardplanes 17.

### Abgleich Schutzbeschaltung

Die Schutzbeschaltung wird im Referenzplan 3 identifiziert. Nachdem alle Funktionsbausteine inklusive der Bausteinports einem Standardfunktionsbaustein zugeordnet wurden, ist bekannt, welche Signale als Schutzsignale wirken. Die komplette Schaltung zur Erzeugung des entsprechenden Schutzsignals im Referenzplan 3 wird identifiziert und dem endgültigen Funktionsplan 2 zugeordnet 109. Alle Verbindungslinien innerhalb dieser Schaltung werden in Analogie zum Referenzplan 3 wieder hergestellt. Das Schutzsignal wird mit dem entsprechenden Schutzeingang des Funktionsbausteins aus dem Standardplan 17 verbunden.

### Abgleich der Verwendung nicht standardisierter Messgrößen

Schaltungen, die nicht standardisierte Messgrößen verwenden, werden im Referenzplan 3 identifiziert. Da alle im Standardplan 17 verwendeten Kennzeichen/Namen aus der Generierung 104 des Standardplanes 17 und der dortigen Kennzeichenzuordnung 114 bereits bekannt sind, ist die Ermittlung der Messgrößen, die zwar im Referenz- 3 aber nicht im Standardplan 17 verwendet werden, einfach möglich. Die komplette Schaltung zur Verarbeitung einer derartigen Messgröße wird identifiziert 109 und dem endgültigen Funktionsplan 2 zugeordnet 109.

Ggf. wird eine Transformation 109 der Schaltung derart durchgeführt, dass sie mit dem Standardplan vereinbar wird. Eine Aufschaltung einer Störgröße auf den Reglerausgang wird beispielsweise zur Einkopplung am Reglereingang transformiert 109. Alle entsprechenden Verbindungslinien werden in Analogie zum Referenzplan 3 hergestellt. Das so ermittelte Signal wird an einer dafür vorgesehenen Stelle des Standardplanes 17 eingekoppelt. Aus der speziellen Kennzeichnung 15 der Kernelemente ist bekannt, welche Stelle hierzu verwendet werden kann.

### Erstellung 102 der anlagenspezifischen Funktionspläne 2

Darauf, d.h. auf diesen automatischen Abgleich 103, aufbauend werden, wie FIG 1 zeigt, die endgültigen anlagenspezifischen Funktionspläne 2 erstellt 102.

Die datenförmigen Repräsentationen 10 der endgültigen anlagenspezifischen Funktionspläne 2 werden in die spezifische Darstellung 12 des Leitsystems des Kraftwerks transformiert 110.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: (Projektierungs-)System/Vorrichtung, Advanced Rapid Technology Engineering (ART-E)
- 2: anlagenspezifische Projektierungsunterlage/-funktionsplan
- 3: Referenz-Projektierungsunterlage/-funktionsplan
- 4: Abgleichskennzeichnung, Kennzeichnung, Abgleichsgrad
- 5: Standard-Projektierungsobjekte, Standard
- 6: projektspezifische Projektierungsunterlage/-funktionsplan
- 7: spezifische Beschreibung, Varianten-Definitionsliste
- 8: Archiv, Standard-Datenbank
- 9: (Teil-)Funktionalität
- 10: analysierbare (Daten-)Struktur, datenförmige Repräsentation. Liste
- 11: Projektierungsobjekte
- 12: spezifische Darstellung/Repräsentation incl. Design
- 13: (Papier-)Unterlage
- 14: Symbolbibliothek
- 15: spezielle (Abgleichs-)Kennzeichnung
- 16: Datenverarbeitungsmittel, programmierte/-bare Recheneinheit
- 17: Standard, Standard-Projektierungsunterlage/-Funktionsplan
- 18: Verwendung von (4), Berücksichtigung, Verknüpfung
- 100: Verfahren zur Erzeugung einer anlagenspezifischen Projektierungsunterlage
- 101: Erzeugung einer Referenz-Projektierungsunterlage
- 102: Erstellung einer anlagenspezifischen Projektierungsunterlage
- 103: Abgleich mit Referenz
- 104: Auswahl aus Archiv, Generierung einer Standard-Projektierungsunterlage/-funktionsplans
- 105: Erstellung einer projektspezifische Projektierungsunterlage
- 106: Transformation der projektspezifischen Projektierungsunterlage/-funktionsplan in datenförmige Repräsentation
- 107: Transformation der Referenz-Projektierungsunterlage/-funktionsplan in datenförmige Repräsentation
- 108: Analyse
- 109: Vergleich, Auswahl, Übernahme. Lücken schließen, Anpassen bzw. Transformation
- 110: Transformation der anlagenspezifischen Projektierungsunterlage/-funktionsplan in spezifische Repräsentation
- 111: digitale Bildverarbeitung, Scannen
- 112: digitale Bilderkennung, Auswertung digitaler Bildinformation, Identifizierung von Funktionsplanelementen, Zuordnung von Funktionsplanelementen
- 113: Filterung
- 114: Kennzeichnung
- 115: Erstellung einer Varianten-Definitionsliste, Erstellung einer Beschreibung

## Patentansprüche

1. Verfahren (100) zur Erzeugung einer anlagenspezifischen Projektierungsunterlage (2), insbesondere zur Erzeugung eines anlagenspezifischen Funktionsplans (2), für eine zu projektierende Leittechnik einer technischen Anlage mit folgenden Schritten:
- Erzeugung einer Referenz-Projektierungsunterlage (3) der technischen Anlage (101),
- Erstellung der anlagenspezifischen Projektierungsunterlage (2) (102)
- durch einen unter Verwendung (18) einer Abgleichskennzeichnung (4) durchgeführten Abgleich (103) von einer unter Verwendung von Standard-Projektierungsobjekten (5) erstellten projektspezifischen Projektierungsunterlage (6) der technischen Anlage mit der Referenz-Projektierungsunterlage (3),
- wobei bei dem Abgleich die projektspezifische Projektierungsunterlage (6) mit der Referenz-Projektierungsunterlage verglichen wird und dabei anhand der Abgleichskennzeichnung ein Projektierungsobjekt aus der projektspezifischen Projektierungsunterlage (6) oder der Referenz-Projektierungsunterlage für die anlagenspezifische Projektierungsunterlage (2) ausgewählt wird.

2. Verfahren (100) nach mindestens einem der voranstehenden Ansprüchen
**dadurch gekennzeichnet, dass**
die Standard-Projektierungsobjekte (5) unter Verwendung einer spezifischen Beschreibung (7) der technischen Anlage aus einer Mehrzahl von vorgegebenen Standard-Projektierungsobjekten (5), insbesondere gespeichert in einem Archiv (8), ausgewählt werden (104).

3. Verfahren (100) nach mindestens einem der voranstehenden Ansprüchen
**dadurch gekennzeichnet, dass**
dass die projektspezifische Projektierungsunterlage (6) unter Verwendung einer spezifischen Beschreibung (7) aus den Standard-Projektierungsobjekten (5) erstellt wird (105).

4. Verfahren (100) nach mindestens einem der voranstehenden Ansprüchen
**dadurch gekennzeichnet, dass**
die vorgebbare Abgleichskennzeichnung (4) einen Rang, insbesondere eine Vorrangigkeit, eines Standard-Projektierungsobjekts (5) und/oder einen Rang, insbesondere eine Vorrangigkeit, mindestens einer Funktionalität (9) der technischen Anlage beschreibt.

5. Verfahren (100) nach mindestens dem voranstehenden Anspruch
**dadurch gekennzeichnet, dass**
der Rang des Standard-Projektierungsobjekts (5) und/oder der Rang der Funktionalität (9) abhängig von einer projektspezifischen Variante der technischen Anlage sind/ist und/oder dass die Funktionalität (9) ein Regelungskonzept, eine Sollwertbeschaltung, eine Störgrößenaufschaltung, ein Steuerungskonzept, eine Schutzbeschaltung und/oder eine Verwendung nicht standardisierter Messgrößen ist.

6. Verfahren (100) nach mindestens einem der voranstehenden Ansprüchen
**dadurch gekennzeichnet, dass**
die projektspezifische Projektierungsunterlage (6) und die Referenz-Projektierungsunterlage (3) dieselbe, analysierbare Datenstruktur (10) aufweisen oder in diese (10) transformiert werden (106, 107), wobei bei dem Abgleich (103) unter Analyse (108) dieser analysierbaren Datenstruktur (10) jeweils sich entsprechende Projektierungsobjekte (11) aus der projektspezifischen Projektierungsunterlage (6) und aus der Referenz-Projektierungsunterlage (3) ermittelt werden.

7. Verfahren (100) nach mindestens einem der voranstehenden Ansprüchen
**dadurch gekennzeichnet, dass**
bei dem Abgleich (103) jeweils einander entsprechende Projektierungsobjekte (11) aus projektspezifischen Projektierungsunterlagen (6) und aus der Referenz-Projektierungsunterlage (3) unter Verwendung der Abgleichskennzeichnung (4) verglichen werden (109) und das jeweilige als vorrangig gekennzeichnete Projektierungsobjekt (11) für die anlagenspezifische Projektierungsunterlage (2) ausgewählt wird (109) und/oder dass bei dem Abgleich (103) zunächst als vorrangig gekennzeichnete Projektierungsobjekte (11) aus der projektspezifischen Projektierungsunterlage (6) in die anlagenspezifische Projektierungsunterlage (2) übernommen werden (109) und anschließend Lücken in der anlagenspezifischen Projektierungsunterlage (2) durch Projektierungsobjekte (11) aus der Referenz-Projektierungsunterlage (3) geschlossen werden (109).

8. Verfahren (100) nach mindestens dem Anspruch 6 oder Anspruch 7
**dadurch gekennzeichnet, dass**
in der anlagenspezifischen Projektierungsunterlage (2) auch ein solches Projektierungsobjekt (11) aus der Referenz-Projektierungsunterlage (6) aufgenommen wird, für welches bei dem Abgleich (103) kein entsprechendes Projektierungsobjekt (11) aus der projektspezifischen Projektierungsunterlage (6) ermittelt wurde, insbesondere dass bei der Aufnahme (109) dieses Projektierungsobjekts (11) in die anlagenspezifischen Projektierungsunterlage (2) dieses (11) angepasst wird (109).

9. Verfahren (100) nach mindestens dem Anspruch 6
**dadurch gekennzeichnet, dass**
die anlagenspezifische Projektierungsunterlage (2) auch dieselbe, analysierbare Datenstruktur (10) wie die projektspezifische Projektierungsunterlage (6) und die Referenz-Projektierungsunterlage (3) aufweist und/oder die anlagenspezifische Projektierungsunterlage (2) aus dieser analysierbaren Datenstruktur (10) in eine spezifische Darstellung (12) des Leitsystems der technischen Anlage transformiert wird (110).

10. Verfahren (100) nach mindestens einem der voranstehenden Ansprüchen
**dadurch gekennzeichnet, dass**
die Referenz-Projektierungsunterlage (3) mittels digitaler Bildverarbeitung (111) von einer vorgegebenen Unterlage (13) erstellt wird (111) und/oder dass die Referenz-Projektierungsunterlage (3) durch Auswertung (112) digitaler Bildinformation, insbesondere durch Auswertung (112) von der mittels digitaler Bildverarbeitung (111) bearbeiteten, vorgegebenen Unterlage (13), erstellt wird (112), wobei insbesondere bei der Auswertung (112) die Referenz-Projektierungsunterlage (3) in einer analysierbaren Datenstruktur (10) erstellt wird.

11. Verfahren (100) nach mindestens dem voranstehenden Anspruch
**dadurch gekennzeichnet, dass**
die digital bildverarbeitete Referenz-Projektierungsunterlage (3) gefiltert wird (113) und/oder dass die Auswertung (112) der digitalen Bildinformation, insbesondere die Auswertung (112) von der mittels digitaler Bildverarbeitung (111) bearbeiteten, vorgegebenen Unterlage (13), unter Verwendung einer Symbolbibliothek (14) erfolgt, wobei insbesondere bei der Auswertung (112) die Referenz-Projektierungsunterlage (3) in einer analysierbaren Datenstruktur (10) erstellt wird.

12. Verfahren (100) nach mindestens einem der voranstehenden Ansprüchen
**dadurch gekennzeichnet, dass**
eine Projektierungsunterlage (2, 3, 6) Projektierungsobjekte (11) aufweist und/oder dass eine Projektierungsunterlage (2, 3, 6)ein Funktionsplan ist und/oder dass ein Projektierungsobjekt (11) einer Projektierungsunterlage (2, 3, 6) ein Funk tionsplanobjekt (11), insbesondere ein Funktionsbaustein, eine Verbindung, ein Text, eine Beschreibung oder ein Name, ist.

13. Verfahren (100) nach mindestens einem der voranstehenden Ansprüchen
**dadurch gekennzeichnet, dass**
ein Projektierungsobjekt (11) der projektspezifischen Projektierungsunterlage (6), welches nach der Abgleichskennzeichnung (4) eine bestimmte vorgebbare Abgleichskennzeichnung aufweist, zusätzlich mit einer speziellen Abgleichskennzeichnung (15) beschrieben wird und der Abgleich (103) unter Verwendung auch dieser speziellen Abgleichskennzeichnung (15) erfolgt.

14. Vorrichtung (1) zur Erzeugung einer anlagenspezifischen Projektierungsunterlage (2), insbesondere zur Erzeugung eines anlagenspezifischen Funktionsplans (2), für eine zu projektierende Leittechnik einer technischen Anlage, mit
- einem Datenverarbeitungsmittel (16), insbesondere einer programmierten Recheneinheit (16), welches derart eingerichtet ist, dass folgende Schritte durchführbar sind:
- Erzeugung einer Referenz-Projektierungsunterlage (3) der technischen Anlage (101),
- Erstellung der anlagenspezifischen Projektierungsunterlage (2) (102),
- durch einen unter Verwendung einer Abgleichskennzeichnung (4) durchgeführten Abgleich (103) von einer unter Verwendung von Standard-Projektierungsobjekten (5) erstellten projektspezifischen Projektierungsunterlage (6) der technischen Anlage mit der Referenz-Projektierungsunterlage (3), wobei bei dem Abgleich die projektspezifische Projektierungsunterlage (6) mit der Referenz-Projektierungsunterlage verglichen wird und dabei anhand der Abgleichskennzeichnung ein Projektierungsobjekt aus der projektspezifischen Projektierungsunterlage (6) oder der Referenz-Projektierungsunterlage für die anlagenspezifische Projektierungsunterlage (2) ausgewählt wird.

15. Verwendung der nach mindestens einem der voranstehenden Ansprüche erzeugten anlagenspezifischen Projektierungsunterlage (2) für die zu projektierende Leittechnik der technischen Anlage, insbesondere für eine Kraftwerksleittechnik eines Kraftwerks.

## Claims

1. Method (100) for generating a system-specific project design document (2), in particular for generating a system-specific functional plan (2), for a control technology to be project-designed for a technical system, having the following steps:
- generating a reference project design document (3) of the technical system (101),
- preparing the system-specific project design document (2) (102)
- by a comparison (103), which is carried out using (18) a comparison identification (4), of a project-specific project design document (6), which is prepared using standard project design objects (5), of the technical system to the reference project design document (3),
- wherein during the comparison, the project-specific project design document (6) is compared to the reference project design document and in this case on the basis of the comparison identification, a project design object is selected from the project-specific project design document (6) or the reference project design document for the system-specific project design documents (2).

2. Method (100) according to Claim 1, **characterized in that** the standard project design objects (5) are selected (104) using a specific description (7) of the technical system from a plurality of predefined standard project design objects (5), in particular stored in an archive (8).

3. Method (100) according to at least one of the preceding claims, **characterized in that**
the project-specific project design document (6) is prepared (105) using a specific description (7) from the standard project design objects (5).

4. Method (100) according to at least one of the preceding claims, **characterized in that** the predefinable comparison identification (4) describes a rank, in particular a superiority, of a standard project design object (5) and/or a rank, in particular a superiority, of at least one functionality (9) of the technical system.

5. Method (100) according to at least the preceding claim, **characterized in that** the rank of the standard project design object (5) and/or the rank of the functionality (9) is/are dependent on a project-specific variant of the technical system, and/or **in that** the functionality (9) is a regulating concept, a setpoint value wiring, a feedforward control, a control concept, a protective circuit, and/or a use of nonstandardized measured variables.

6. Method (100) according to at least one of the preceding claims, **characterized in that** the project-specific project design document (6) and the reference project design document (3) have the same analyzable data structure (10) or are transformed (106, 107) therein (10), wherein during the comparison (103), with analysis (108) of this analyzable data structure (10), in each case corresponding project design objects (11) are ascertained from the project-specific project design document (6) and from the reference project design document (3).

7. Method (100) according to at least one of the preceding claims, **characterized in that** during the comparison (103), respective project design objects (11) corresponding to one another from the project-specific project design document (6) and from the reference project design document (3) are compared (109) using the comparison identification (4), and the respective project design object (11) identified as superior is selected (109) for the system-specific project design document (2), and/or **in that** during the comparison (103), firstly project design objects (11) identified as superior from the project-specific project design document (6) are accepted (109) in the system-specific project design document (2) and subsequently gaps in the system-specific project design document (2) are closed (109) by project design objects (11) from the reference project design document (3).

8. Method (100) according to at least Claim 6 or Claim 7, **characterized in that**, in the system-specific project design document (2), a project design object (11) from the reference project design document (6) is also accommodated for which, during the comparison (103), no corresponding project design object (11) from the project-specific project design document (6) was ascertained, in particular **in that**, during the accommodation (109) of this project design object (11) in the system-specific project design document (2), it (11) is adapted (109).

9. Method (100) according to at least Claim 6, **characterized in that** the system-specific project design document (2) also has the same analyzable data structure (10) as the project-specific project design document (6) and the reference project design document (3) and/or the system-specific project design document (2) is transformed (110) from this analyzable data structure (10) into a specific representation (12) of the control system of the technical system.

10. Method (100) according to at least one of the preceding claims, **characterized in that** the reference project design document (3) is prepared (111) by means of digital image processing (111) of a predefined document (13), and/or **in that** the reference project design document (3) is prepared (112) by analyzing (112) digital image information, in particular by analyzing (112) the predefined document (13) processed by means of digital image processing (111), wherein in particular during the analysis (112), the reference project design document (3) is prepared in an analyzable data structure (10).

11. Method (100) according to at least the preceding claim, **characterized in that** the digitally image-processed reference project design document (3) is filtered (113) and/or **in that** the analysis (112) of the digital image information, in particular the analysis (112) of the predefined document (13) processed by means of digital image processing (111), is performed using a symbol library (14), wherein the reference project design document (3) is prepared in an analyzable data structure (10), in particular during the analysis (112).

12. Method (100) according to at least one of the preceding claims, **characterized in that** a project design document (2, 3, 6) has project design objects (11), and/or **in that** a project design document (2, 3, 6) is a functional plan, and/or **in that** a project design object (11) of a project design document (2, 3, 6) is a functional
plan object (11), in particular a functional module, a connection, a text, a description, or a name.

13. Method (100) according to at least one of the preceding claims, **characterized in that** a project design object (11) of the project-specific project design document (6), which has a defined predefinable comparison identification after the comparison identification (4), is additionally described with a special comparison identification (15) and the comparison (103) is performed also using this special comparison identification (15).

14. Device (1) for generating a system-specific project design document (2), in particular for generating a system-specific functional plan (2) for a control technology to be project-designed of a technical system, having
- a data processing means (16), in particular a programmed computing unit (16), which is configured such that the following steps can be carried out:
- generating a reference project design document (3) of the technical system (101),
- preparing the system-specific project design document (2) (102),
- by a comparison (103), which is carried out using a comparison identification (4), of a project-specific project design document (6), which is prepared using standard project design objects (5), of the technical system to the reference project design document (3), wherein during the comparison, the project-specific project design document (6) is compared to the reference project design document and in this case on the basis of the comparison identification, a project design object is selected from the project-specific project design document (6) or the reference
project design document for the system-specific project design document (2).

15. Use of the system-specific project design document (2) generated according to at least one of the preceding claims for the control technology to be project-designed of the technical system, in particular for a power plant control technology of a power plant.

## Revendications

1. Procédé (100) de production d'un support (2) de planification spécifique à une installation, notamment de production d'un plan (2) fonctionnel spécifique à une installation pour une technique de conduite à planifier d'une installation technique, comprenant les stades suivantes :
- production d'un support (3) de planification de référence de l'installation (101) technique,
- création du support (2) (102) de planification spécifique à l'installation
- par un ajustement (103), effectué en utilisant (18) une caractérisation (4) d'ajustement d'un support (6) de planification spécifique à la planification, créé en utilisant des objets (5) de planification normalisés, de l'installation technique au support (3) de planification de référence,
- dans lequel, lors de l'ajustement, on compare le support (6) de planification spécifique à la planification au support de planification de référence et, à l'aide de la caractérisation d'ajustement, on choisit un objet de planification dans le support (6) de planification spécifique à la planification ou dans le support de planification de référence pour le support (2) de planification spécifique à l'installation.

2. Procédé (100) suivant au moins l'une des revendications précédentes,
**caractérisé en ce que**
l'on choisit les objets (5) de planification normalisés en utilisant une description (7) spécifique de l'installation technique parmi une multiplicité d'objets (5) de planification normalisés donnée à l'avance, notamment mémorisée dans une archive (8).

3. Procédé (100) suivant au moins l'une des revendications précédentes,
**caractérisé en ce que**
l'on crée (105) le support (6) de planification spécifique à la planification en utilisant une description (7) spécifique composée des objets (5) de planification normalisés.

4. Procédé (100) suivant au moins l'une des revendications précédentes,
**caractérisé en ce que** la caractérisation (4) d'ajustement pouvant être donnée à l'avance décrit un rang, notamment une priorité, d'un objet (5) de planification normalisé et/ou un rang, notamment une priorité, d'au moins une fonctionnalité (9) de l'installation technique.

5. Procédé (100) suivant au moins l'une des revendications précédentes,
**caractérisé en ce que**
le rang de l'objet (5) de planification normalisé et/ou le rang de la fonctionnalité (9) sont/est indépendant d'une variante spécifique à la planification de l'installation technique et/ou **en ce que** la fonctionnalité (9) est un concept de régulation, un circuit d'évaluation de consigne, un circuit de grandeurs parasites, un concept de commande, un circuit de protection et/ou une utilisation de grandeurs de mesure non normalisées.

6. Procédé (100) suivant au moins l'une des revendications précédentes,
**caractérisé en ce que**
le support (6) de planification spécifique à la planification et le support (3) de planification de référence ont la même structure (10) de données pouvant être analysées ou sont transformées (106, 107) en celles-ci (10), dans lequel, lors de l'ajustement (103), on détermine, en analysant (108) cette structure (10) de données pouvant être analysée, respectivement des objets (11) de planification correspondants dans le support (6) de planification spécifique à la planification et dans le support (3) de planification de référence.

7. Procédé (100) suivant au moins l'une des revendications précédentes,
**caractérisé en ce que**
lors de l'ajustement (103), on compare (109), en utilisant la caractérisation (4) d'ajustement, des objets (11) de planification correspondant les uns aux autres du support (6) de planification spécifique à la planification et du support (3) de planification de référence et on choisit (109) l'objet (11) de planification caractérisé respectivement comme prioritaire pour le support (2) de planification spécifique à l'installation et/ou **en ce que**, lors de l'ajustement (103), on prend en charge (109) dans le support (2) de planification spécifique à l'installation d'abord des objets (11) de planification caractérisés comme prioritaires du support de planification spécifique à la planification et ensuite on comble des lacunes du support (2) de planification spécifique à l'installation par des objets (11) de planification du support (3) de planification de référence.

8. Procédé (100) suivant au moins la revendication 6 ou la revendication 7,
**caractérisé en ce que**
l'on enregistre dans le support (2) de planification spécifique à l'installation, également, un objet (11) de planification du support (6) de planification de référence pour lequel on n'a pas déterminé, lors de l'ajustement d'objet (11) de planification correspondant du support (6) de planification spécifique à la planification, notamment **en ce que**, lors de l'enregistrement (109) de cet objet (111) de planification dans le support (2) spécifique à l'installation, on a adapté (109) celui-ci (11).

9. Procédé (100) suivant au moins la revendication 6, **caractérisé en ce que** le support (2) de planification spécifique à l'installation a aussi la même structure (10) de données pouvant être analysée que le support (6) de planification spécifique à la planification et que le support (3) de planification de référence et/ou on transforme le support (2) de planification spécifique à l'installation à partir de cette structure (10) de données pouvant être analysée en une représentation (12) spécifique du système de conduite (110) de l'installation technique.

10. Procédé (100) suivant au moins l'une des revendications précédentes,
**caractérisé en ce que**
on crée le support (3) de planification de référence, au moyen d'un traitement (111) d'images numériques, à partir d'un support (13) donné à l'avance, et/ou **en ce que** l'on crée (112) le support (3) de planification de référence, en exploitant (112) de l'information d'image numérique, notamment en exploitant (112) le support (13) donné à l'avance et traité au moyen du traitement (111) d'image numérique, en créant notamment, lors de l'exploitation (112), le support (3) de planification de référence en une structure (10) de données pouvant être analysée.

11. Procédé (100) suivant au moins l'une des revendications précédentes,
**caractérisé en ce que**
l'on filtre (113) le support (3) de planification de référence ayant subi un traitement d'image de manière numérique et/ou l'exploitation (112) de l'information d'image numérique, notamment l'exploitation (112) du support (13) donné à l'avance et traité au moyen du traitement (111) d'image numérique, s'effectue en utilisant une bibliothèque (14) de symboles, le support (3) de planification de référence étant créé, notamment lors de l'exploitation (112), en une structure (10) de données pouvant être analysée.

12. Procédé (100) suivant au moins l'une des revendications précédentes,
**caractérisé en ce que**
un support (2, 3, 6) de planification a des objets (11) de planification et/ou **en ce qu'**un support (2, 3, 6) de planification est un plan fonctionnel et/ou **en ce qu'**un objet (11) de planification d'un support (2, 3, 6) de planification est un objet (11) de plan fonctionnel, notamment un module fonctionnel, une liaison, un texte, une description ou un nom.

13. Procédé (100) suivant au moins l'une des revendications précédentes,
**caractérisé en ce que**
l'on décrit un objet (11) de planification du support (6) de planification spécifique à la planification qui a, suivant la caractérisation (4) d'ajustement, une caractérisation d'ajustement pouvant être donnée à l'avance et définie, supplémentairement par une caractérisation (15) d'ajustement spéciale et l'ajustement (103) s'effectue en utilisant aussi cette caractérisation (15) d'ajustement spéciale.

14. Dispositif (1) de production d'un support (2) de planification spécifique à l'installation, notamment de production d'un plan (2) fonctionnel spécifique à l'installation, pour une technique de conduite à planifier d'une installation technique, comprenant :
- un moyen (16) de traitement de donnée, notamment une unité (16) informatique programmée, qui est conçue de manière à pouvoir effectuer les stades suivantes :
- production d'un support (3) de planification de référence de l'installation (101) technique,
- création du support (2) (102) de planification spécifique à l'installation,
- par un ajustement (103) effectué en utilisant (18) une caractérisation (4) d'ajustement d'un support (6) de planification spécifique à la planification, créé en utilisant des objets (5) de planification normalisés, de l'installation technique au support (3) de planification de référence, dans lequel, lors de l'ajustement, on compare le support (6) de planification spécifique à la planification au support de planification de référence et, à l'aide de la caractérisation d'ajustement, on choisit un objet de planification dans le support (6) de planification spécifique à la planification ou dans le support de planification de référence pour le support (2) de planification spécifique à l'installation.

15. Utilisation du support (2) de planification spécifique à l'installation produit suivant au moins l'une des revendications précédentes pour la technique de conduite à planifier de l'installation technique, notamment pour une technique de conduite d'une centrale électrique.
